# EUROPÄISCHE PATENTSCHRIFT

(11) **EP 0 746 807 B1**
(45) Veröffentlichungstag und Bekanntmachung des Hinweises auf die Patenterteilung: **19.07.2000**
(21) Anmeldenummer: 95942711.3
(22) Anmeldetag: 20.12.1995
(51) Int. Cl.: G05D 23/13, F01P 7/16

(54) **THERMOSTATVENTIL FÜR DEN KÜHLMITTELKREISLAUF EINER BRENNKRAFTMASCHINE**
THERMOSTAT VALVE FOR THE COOLANT CIRCULATION OF AN INTERNAL COMBUSTION ENGINE
SOUPAPE DE THERMOSTAT DESTINEE AU CIRCUIT DE REFROIDISSEMENT D'UN MOTEUR A COMBUSTION INTERNE

(30) Priorität: 21.12.1994 DE 4445761
(43) Veröffentlichungstag der Anmeldung: 11.12.1996
(73) Patentinhaber: Bayerische Motoren Werke Aktiengesellschaft, 80788 München (DE); Behr Thermot-tronik GmbH & Co., 70806 Kornwestheim (DE)
(72) Erfinder: HUEMER, Gerhart, D-85630 Neukeferloh (DE); LEMBERGER, Heinz, D-85774 Unterföhring (DE); LEU, Peter, D-73700 Denkendorf (DE); KURZ, Manfred, D-71254 Ditzingen (DE); SAUR, Roland, D-70195 Stuttgart (DE)
(86) Internationale Anmeldenummer: EP9505053
(87) Internationale Veröffentlichungsnummer: WO9619762

(56) Entgegenhaltungen:
- EP-A- 0 448 315
- DE-A- 3 400 699
- DE-A- 4 233 913

## Beschreibung

Die Erfindung bezieht sich nach dem Oberbegriff des Patentanspruches 1 auf ein Thermostatventil für den Kühlmittelkreislauf einer Brennkraftmaschine.

Ein Thermostatventil mit einer als elektrische Heizeinrichtung gestalteten, gesonderten Wärmezufuhr-Einrichtung ist beispielsweise aus der DE-A 42 33 913 bekannt. Bei diesem Thermostatventil ist die den Dehnstoff bevorratende Kapsel des Dehnstoffelementes im kaltseitigen, die Heizeinrichtung enthaltenden Endabschnitt mittels einer Kappe aus Kunststoff abgedeckt. Die gegenüber einem kalten Kühlmittel stromauf des Hauptventiles isolierend wirkende Kappe ist in ihrer Erstreckung längs der Kapsel so gewählt, daß sie die Durchbrechung des Ventiltellers durchgreift und unter Zwischenschaltung eines Dichtmittels die Durchbrechung über einen ersten Öffnungshubabschnitt des Ventiltellers abdichtet. Bei weiterem Öffnungshub strömt über den zwischen der Durchbrechung und dem Außenumfang der Kapsel gebildeten Ringspalt kaltes Kühlmittel dem heißseitigen Endabschnitt der Kapsel bzw. des Dehnstoffelementes zu zwecks Abkühlung des in der Kapsel bevorrateten Dehnstoffes.

Bei einem Thermostatventil mit elektrisch betriebener Heizeinrichtung kann diese in Abhängigkeit von Kennfeldgrößen, insbesondere der Brennkraftmaschine zu- und abgeschaltet werden. Für den Fall einer relativ hoch, vorzugsweise über 100°C eingeregelten Kühlmitteltemperatur im Kühlkreislauf der Brennkraftmaschine ist zur schnellstmöglichen Anpassung der Kühlmitteltemperatur an einen geänderten Lastbedarf ein rasch reagierendes Thermostatventil erforderlich.

Das eingangs beschriebene Thermostatventil arbeitet für eine entsprechende Kühlmitteltemperatur-Anpassung bei raschen Lastwechseln unterschiedlicher Größe relativ langsam, weil zum einen der direkt heiß beaufschlagte Anteil der Dehnstoff-Kapsel gegenüber dem von der isolierenden Kappe abgedeckten Anteil verhältnismäßig klein ist, und weil zum anderen das als elektrische Heizeinrichtung vorgesehene PTC-Element als Kaltleiter ein entsprechend seiner Masse träges Ansprechverhalten aufweist.

Aufgabe der Erfindung ist, bei einem gattungsgemäßen Thermostatventil die zusätzliche Wärmezufuhr-Einrichtung derart zu verbessern, daß ein schnelleres Ansprechverhalten des Thermostatventiles erreicht ist.

Diese Aufgabe ist gemäß einem ersten Vorschlag nach dem Patentanspruch 1 dadurch gelöst, daß die Wärmezufuhr-Einrichtung eine der Dehnstoff-Kapsel im kaltseitigen Endabschnitt jenseits des Ventiltellers zugeordnete Ringkammer mit heißseitiger Kühlmittelverbindung ist.

Grundgedanke der Erfindung ist, einen Teil des kaltseitigen Endabschnittes des Dehnstoffelementes bzw. der Dehnstoff-Kapsel mittels der Ringkammer bei den Durchfluß des kalten Kühlmittels ganz oder über einen vorbestimmten Öffnungshub teilweise sperrendem Hauptventil mit heißem Kühlmittel zu beaufschlagen. Damit ist in vorteilhafter Weise ein relativ großer Dehnstoff-Anteil über kurze Wärmeleitwege durch den Mantel der Dehnstoff-Kapsel mittels des heißen Kühlmittels rascher erwärmt und ferner auf einem höheren Temperaturniveau gehalten. Mit diesem höheren Temperaturniveau verringert sich die Differenz zur Regeltemperatur des Dehnstoffelementes, womit ein schnelleres Ansprechen des Thermostatventiles gegeben ist.

Eine bevorzugte Ausgestaltung der Erfindung kennzeichnet sich dadurch, daß ein in der Durchbrechung des Ventiltellers angeordneter, kaltseitig überstehender Rohrabschnitt mit dem Außenumfang der Dehnstoff-Kapsel die kühlmittelhaltige Ringkammer bildet, die kaltseitig eine in Abhängigkeit eines vorbestimmten Hubes des Ventiltellers bzw. des Rohrabschnittes gesteuerte Öffnung aufweist. Der Vorteil dieser erfindungsgemäß gestalteten Ringkammer ist, daß diese ab einem vorbestimmten größeren Öffnungshub auch als Bypass für kaltes Kühlmittel dient.

Die Wirkung der mit heißem Kühlmittel gefüllten Ringkammer kann weiter vorteilhaft dadurch verbessert werden, daß der Rohrabschnitt entweder aus einem Isoliermaterial gefertigt oder als metallener Rohrabschnitt mit einer wärmerückhaltenden Isolierschicht versehen ist.

In weiterer Ausgestaltung des mit einer Ringkammer versehenen Thermostatventiles wird vorgeschlagen, daß der kaltseitige Endabschnitt der Dehnstoff-Kapsel über eine Isolierkappe ortsfest abgestützt ist, die in ihrer ringkammerseitigen Erstreckung ein elastisches Verschlußelement trägt, das über einen vorbestimmten Hub des Ventiltellers mit dem Rohrabschnitt dicht zusammenwirkt bis zur Offensteuerung der Ringkammer. Mit dieser erfindungsgemäß hubabhängig verzögerten Freigabe der Ringkammer als Bypass für kaltes Kühlmittel sind insbesondere zum Öffnungsbeginn des Hauptventiles nachteilige Instabilitäten vermieden. Weiter bewirkt die als Bypass dienende Ringkammer eine intensive Beaufschlagung der Dehnstoff-Kapsel mit kaltem Kühlmittel, wodurch ein Überschwingen in Richtung zu tieferen Regeltemperaturen vermieden ist.

Bekanntlich dienen die vorzugsweise in Flüssigkeitskreisläufen verwendeten Thermostat-Ventile ebenso wie die vorzugsweise in elektrischen Stromkreisen eingesetzten Thermostat-Schalter zur Einhaltung eines vorbestimmten Temperatur-Soll-Wertes.

Zur genaueren Einhaltung der jeweiligen Soll-Temperatur ist es bei gattungsgemäßen Thermostat-Ventilen mit Dehnstoffelementen weiter bekannt, im Dehnstoff einen elektrischen Heizwiderstand vorzusehen, der z.B. gemäß der DE-C 30 18 682 in Abhängigkeit mindestens einer Zustandsgröße einer Brennkraftmaschine bestromt werden kann. Als elektrischer Heizwiderstand im jeweiligen Dehnstoff eines Dehnstoffelementes ist ein PTC- bzw. ein Kaltleiter-Widerstand vorgesehen, wie dies neben der gattungsbildenden DE-A 42 33 913 auch aus den DE-OS'en 1 798 294, 1 814 223 und 26 25 561 hervorgeht.

Ein PTC-Widerstand kommt auch bei dem in der DE-A 21 13 388 als "Thermostat" bezeichneten Thermostat-Schalter zur Anwendung. Demgegenüber ist in der DE-U 79 20 923 für einen Thermostat-Schalter ein Dickschicht-Widerstand als elektrisches Heizelement beschrieben. Schließlich beschreibt die jüngere DE-A 33 31 847 gegenüber einem PTC-Widerstand einen Schicht- bzw. Dickschicht-Widerstand als eine gleichwertige Alternative. Schließlich ist mit der DE-A 35 39 425 ein fortschrittlich gestalteter Thermostat-Schalter bekannt geworden, bei dem ein Träger aus Aluminiumoxidkeramik einen Schicht- bzw. Metallschicht-Widerstand bzw. Dickschicht-Widerstand trägt. Aluminiumoxidkeramik ist gemäß den Ausführungen in Spalte 2, letzter Satz auf Seite 300 in dem in 1974 erschienenen Band 7 von "Ullmanns Encyklopädie der technischen Chemie" ein ausgezeichneter elektrischer Isolator, der zudem eine gute Wärmeleitfähigkeit und nach der DE-A 35 39 425 eine geringe Wärmekapazität aufweist.

Gegenüber diesem Stand der Technik sieht eine weitere Ausgestaltung der Erfindung gemäß dem Anspruch 6 vor, daß im kaltseitigen Endabschnitt der Kapsel als zusätzliche Wärmezufuhr-Einrichtung ein elektrischer Schichtwiderstand, vorzugsweise ein Metall-Schichtwiderstand, als Heizelement im Dehnstoff der Kapsel plaziert ist.

Metall-Schichtwiderstände weisen bekanntlich bei vorteilhaft geringem Strombedarf eine hohe Heizleistung auf, wobei sie weiter aufgrund geringer Masse ein schnelles Ansprechverhalten aufweisen. Zur schnellen Wärmeableitung ist der jeweilige Schichtwiderstand auf einer Metallfahne bzw. einem Metall- oder Kermaik-Körper von hoher Wärmeleitfähigkeit angeordnet, z.B. auf einer Aluminiumoxidkeramikplatte. Dieses Material bevorzugt zur Wärmeleitung einzusetzen ist per se aus der DE-A 33 31 847 bekannt.

Die Wärmeableitung in den Dehnstoff ist weiter dadurch verbessert, daß dem jeweiligen Schichtwiderstand Wärmeleitblöcke aus einem Stoff/Material hoher Wärmeleitfähigkeit zugeordnet sind, wobei die Wärmeleitblöcke durch Rippen vergrößerte Wärmeübergangsflächen zum Dehnstoff aufweisen. Um das Ansprechverhalten des Thermostatventiles nicht ungünstig zu beeinflussen, sind die Wärmeleitblöcke jeweils aus einem Leichtmetall gebildet.

Zwar ist es aus der DE-A 24 59 664 für ein Thermo-Relais bekannt, zur effektiven Fortleitung der Wärme aus einem PTC-Heizwiderstand diesen mit einem Relaisgehäuse aus Kupfer oder Aluminium wärmeleitend zu verbinden. Weiter ist aus der DE-A 29 31 682 ein Thermostat mit einem elektrisch beheizbaren Dehnstoffelement bekannt, dessen Gehäuse zwecks rascheren Wärmetransport in den Dehnstoff durch Rippen und/oder Faltungen eine vergrößerte Wärmeabgabefläche zum Dehnstoff aufweist. Jedoch zeigt dieser bekannte Stand der Technik keine mit einem Metallschicht-Widerstand wärmeleitend verbundenen Wärmeleitblöcke aus einem Leichtmetall.

Die Maßnahme der gesteigerten Wärmeleitung wird zusätzlich dadurch unterstützt, daß der Dehnstoff in der Kapsel mit einem die Wärmeleitung steigernden Metall-Pulver versetzt ist, wie dies per se aus den DD-Patentschriften 240 826 und 241 839 bekannt ist. Als Metall-Pulver für Heizkörper-Thermostate wird vorzugsweise Kupfer- oder Aluminiumpulver vorgeschlagen. Anstelle von elektrisch leitendem Aluminiumpulver ist auch ein elektrisch nicht leitendes Pulver aus Aluminiumoxidkeramik denkbar, die, wie weiter vorne bereits ausgeführt, bei geringer Wärmekapazität eine gute Wärmeleitfähigkeit aufweist.

Jede der vorbeschriebenen erfindungsgemäßen Lösungen im Umfang der Ansprüche 1 mit 5 und 6 mit 10 bewirkt jeweils ein aufgabengemäß schnelleres Ansprechverhalten eines Thermostatventiles. Ein Thermostatventil mit optimalem Ansprechverhalten ist durch die Kombination beider Ausgestaltungen erzielt, womit ein flinkes Ansprechen des Thermostatventiles bei geringer elektrischer Heizleistung erzielt ist.

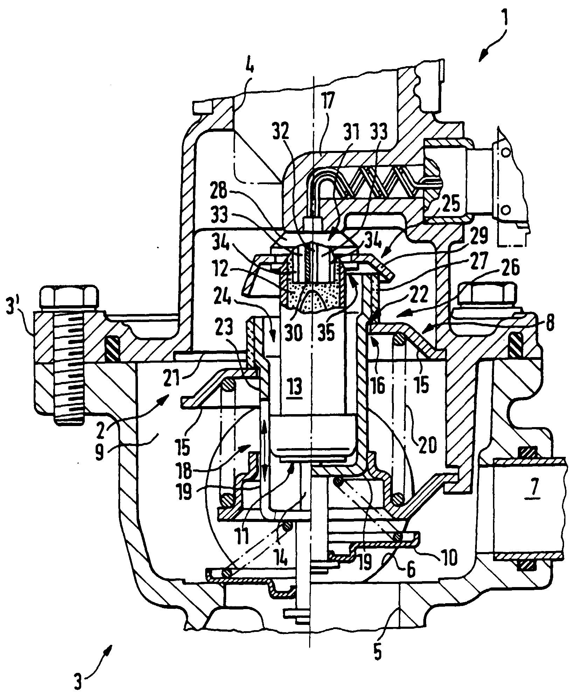

Anhand der Zeichnung ist ein Ausführungsbeispiel eines mit beiden Erfindungen kombinierten Thermostatventiles gezeigt und beschneben. Die Zeichnung zeigt das Thermostatventil im Schnitt, und zwar
- in der rechten Bildhälfte: ein Hauptventil in der Schließstellung, und
- in der linken Bildhälfte: das Hauptventil in der Öffnungsstellung.

Eine Vorrichtung 1 zum Steuern/Regeln der Temperatur einer Kühlflüssigkeit in einem nicht näher gezeigten Kühlmittelkreislauf eines flüssigkeitsgekühlten Motors (Brennkraftmaschine) umfaßt ein Thermostatventil 2 in einem Gehäuse 3. Das Gehäuse 3 steht in Verbindung mit einem Kühler-Rücklauf 4, einem Motorrücklauf 5 und einem Motorvorlauf 6 sowie gegebenenfalls mit einem Heizungsanschluß 7. Ein Hauptventil 8 des Thermostatventiles 2 steuert/regelt den Zufluß des relativ kalten Kühlmittels aus dem Kühler-Rücklauf 4 in eine Mischkammer 9 der Vorrichtung 1. Ein mit dem Hauptventil 8 in Antriebsverbindung stehendes Kurzschlußventil 10 steuert hubabhängig den Zufluß des motorheißen Kühlmittels aus dem Motorrücklauf 5 in die Mischkammer 9, aus der das Kühlmittel im weiteren über den Motorvorlauf 6 dem Kühlkreislauf des Motors bzw. der Brennkraftmaschine zugeführt ist.

Das Hauptventil 8 und mit ihm das Kurzschlußventil 10 sind temperaturabhängig betätigt mittels eines Dehnstoffelementes 11, das eine einen Dehnstoff 12 bevorratende Kapsel 13 umfaßt, wobei an einem Ende der Kapsel 13 unter der Wirkung des temperaturabhängig sein Volumen ändernden Dehnstoffes 12 ein Betätigungsorgan 14 aus- und einfahrbar angeordnet ist.

Die Anordnung des Dehnstoffelementes 11 relativ zu dem einerseits vom Kühlmittel im Kühler-Rücklauf 4 kalt beaufschlagten und andererseits vom Kühlmittel in der Mischkammer 9 heiß beaufschlagten Hauptventil 8 ist derart getroffen, daß das Dehnstoffelement 11 mit seiner Kapsel 13 den Ventilteller 15 des Hauptventiles 8 über eine Durchbrechung 16 durchsetzt für eine kaltseitig ortsfeste Abstützung an einem gehäuseseitigen Widerlager 17.

Mit der vorbeschriebenen Anordnung des Dehnstoffelementes 11 ergibt sich ein im heißseitigen Endabschnitt 18 des Dehnstoffelementes 11 angeordnetes Betätigungsorgan 14, das über ein Betätigungsgestänge 19 mit dem Ventilteller 15 des Hauptventiles 8 in Antriebsverbindung steht. In Schließrichtung ist der Ventilteller 15 von einer Feder 20 gegen einen Dichtsitz 21 im Gehäuseteil 3' beaufschlagt. In Öffnungsrichtung ist der Ventilteller 15 von einer Schulter 22 an einem Rohrabschnitt 23 beaufschlagt.

Der in der Durchbrechung 16 des Ventiltellers 15 angeordnete, kaltseitig überstehende Rohrabschnitt 23 ist Teil des mit dem Betätigungsorgan 14 des Dehnstoffelementes 11 zusammenwirkenden Betätigungsgestänges 19. Dieser beiderseits offene Rohrabschnitt 23 begrenzt mit dem Außenumfang der Dehnstoff-Kapsel 13 eine kühlmittelhaltige Ringkammer 24, die kaltseitig - jenseits des Ventiltellers 15 - in Abhängigkeit eines vorbestimmten Hubes des Ventiltellers 15 mittels eines ihrer Öffnung 35 zugeordneten Verschlußelementes 25 verschließbar bzw. verschlossen gehalten ist.

Wie aus der einzigen Figur hervorgeht, ist die Ringkammer 24 bei geschlossenem Hauptventil 8 sowie über einen ersten Öffnungshub durch das Verschlußorgan 25 weiter geschlossen und somit vom relativ heißen Kühlmittel aus der Mischkammer 9 beaufschlagt. Erreicht ist damit eine intensive Erwärmung des Dehnstoffes 12 auch im kaltseitigen Endabschnitt 26 des Dehnstoffelementes 11, womit auch ein höheres Temperaturniveau sich einstellt. Mit diesem höheren Temperaturniveau verringert sich die Differenz zur Regeltemperatur des Dehnstoffelementes 11 mit dem Vorteil eines schnelleres Ansprechens des Thermostatventiles 2.

Die Wirkung der mit relativ heißem Kühlmittel gefüllten Ringkammer 24 ist zusätzlich durch eine Isolierschicht 27 gesteigert.

Das Dehnstoffelement 11 bzw. die Kapsel 13 ist im kaltseitigen Endabschnitt 26 über eine Isolierkappe 28 am gehäuseseitigen Widerlager 17 ortsfest abgestützt, wobei die Isolierkappe 28 in Richtung der Ringkammer 24 eine zur Anordnung des Verschlußelementes 25 ausreichende Erstreckung aufweist. Das Verschlußelement 25 ist ein in Hubrichtung elastischer Kragen 29, der über einen vorbestimmten Hub des Ventiltellers 15 mit dem Rohrabschnitt 23 bzw. der Isolierschicht 27 dicht zusammenwirkt. Wie aus der Figur in der linken Bildhälfte hervorgeht, ist bei einem vom Rohrabschnitt 23 entfernten Kragen 29 ein Bypass für kaltes Kühlmittel aus dem Kühler-Rücklauf 4 über die Ringkammer 24 erreicht, um ein für rascheres Schließen des Hauptventiles 8 schnelleres Abkühlen des Dehnstoffes 12 zu erreichen.

Das Verschlußelement 25 kann auch ein an der Isolierkappe 28 oder an der Dehnstoff-Kapsel 13 angeordneter O-Ring sein (nicht gezeigt).

Um das Thermostatventil 2 in seinem Ansprechverhalten noch empfindlicher zu machen, weist das Dehnstoffelement 11 im kaltseitigen Endabschnitt 26 der Kapsel 13 eine zusätzliche Wärmezufuhr-Einrichtung auf. Diese ist ein aus einem elektrischen Schichtwiderstand 30 gebildetes Heizelement 31, das im Dehnstoff 12 der Kapsel 13 plaziert ist. Als Schichtwiderstand ist vorzugsweise ein Metall-Schichtwiderstand 30 gewählt, der auf einer Metallfahne oder einem Keramikkörper 32 von durch Formgebung - z.B. Zylinder oder Würfel oder Quader - gewählt großer Oberfläche und hoher Wärmeleitfähigkeit angeordnet ist.

Dem Metall-Schichtwiderstand 30 sind Wärmeleitblöcke 33 aus einem Material hoher Wärmeleitfähigkeit zugeordnet, wobei die Wärmeleitblöcke 33 durch Rippen 34 vergrößerte Wärmeübergangsflächen zum Dehnstoff 12 aufweisen. Im übrigen sind Wärmeleitelemente im Dehnstoff eines Thermostaten aus der DE-A 34 00 699 per se kannt.

Beispielsweise ist der Metall-Schichtwiderstand 30 auf einer Fahne 32 aus Aluminiumoxidkeramik angeordnet, wobei die zugeordneten Wärmeleitblöcke 33 jeweils aus einem Leichtmetall, z.B. einer Alu-Legierung gebildet sind. Zur besseren Wärmefortleitung im Dehnstoff 12 der Kapsel 13 ist dieser mit einem die Wärmeleitung steigernden Metall-Pulver, z.B. einem Aluminium-Pulver versetzt.

Aus dem vorstehenden geht hervor, daß eine erfindungsgemäße Lösung zur Steigerung des Ansprechverhaltens eines Thermostatventiles vorschlägt, den kaltseitigen Endabschnitt 26 des Dehnstoffelementes 11 mittels einer Ringkammer 24 bei im Schließbereich befindlichem Hauptventil 8 mittels heißem Kühlmittel zu beaufschlagen. Eine vergleichbare Wirkung ist bei einem Thermostatventil 2 ohne Ringkammer 24 mit der anderen erfindungsgemäßen Lösung einer mittels eines Metall-Schichtwiderstandes 30 erzielten elektrischen Heizung erreicht. Für ein optimales Ansprechverhalten eines Thermostatventiles 2 sind beide erfindungsgemäßen Lösungen kombiniert, insbesondere für ein in Abhängigkeit von Kennfeldgrößen einer Brennkraftmaschine ein- und ausschaltbares elektrisches Heizelelement 31.

## Patentansprüche

1. Thermostatventil für den Kühlmittelkreislauf einer Brennkraftmaschine,
- bei dem ein einerseits kalt und andererseits heiß beaufschlagtes Hauptventil (8) temperaturabhängig betätigt ist über ein Dehnstoffelement (11), das
- über einen heißseitigen Endabschnitt (18) mit dem Hauptventil (8) in Hubantriebsverbindung steht und über einen kaltseitigen Endabschnitt (26) ortsfest abgestützt ist, wobei
- eine einen Ventilteller (15) des Hauptventiles (8) über eine Durchbrechung (16) durchsetzende einen auf ein in einem der Endabschnitte (18, 26) wirksamen Betätigungsorgan (14) wirkenden Dehnstoff (12) bevorratende Kapsel (13) im kaltseitigen Endabschnitt (26) mit einer gesonderten Wärmezufuhr-Einrichtung ausgerüstet ist,
dadurch gekennzeichnet,
- daß die Wärmezufuhr-Einrichtung eine der Dehnstoff-Kapsel (13) im kaltseitigen Endabschnitt (26) jenseits des Ventiltellers (15) zugeordnete Ringkammer (24) mit heißseitiger Kühlmittelverbindung ist.

2. Thermostatventil nach Anspruch 1, dadurch gekennzeichnet,
- daß ein in der Durchbrechung (16) des Ventiltellers (15) angeordneter, kaltseitig überstehender Rohrabschnitt (23) mit dem Außenumfang der Dehnstoff-Kapsel (13) die kühlmittelhaltige Ringkammer (24) bildet, die
- kaltseitig eine in Abhängigkeit eines vorbestimmten Hubes des Ventiltellers (15) bzw. des Rohrabschnittes (23) gesteuerte Öffnung (35) aufweist.

3. Thermostatventil nach Anspruch 1 und 2, dadurch gekennzeichnet, daß der Rohrabschnitt (23) entweder aus einem Isoliermaterial gefertigt oder als metallener Rohrabschnitt mit einer wärmerückhaltenden Isolierschicht (27) versehen ist.

4. Thermostatventil nach einem der Ansprüche 2 und 3, dadurch gekennzeichnet,
- daß der kaltseitige Endabschnitt (26) der Dehnstoff-Kapsel (13) über eine Isolierkappe (28) ortsfest abgestützt ist, deren
- Erstreckung in Richtung Ringkammer (24) zumindest für eine Anordnung eines Verschlußelementes (25) für die Öffnung (35) der Ringkammer (24) gewählt ist.

5. Thermostatventil nach dem Anspruch 4, dadurch gekennzeichnet,
- daß das Verschlußelement (25) ein in Hubrichtung weisender, elastischer Kragen (29) oder ein O-Ring ist, das jeweils
- über einen vorbestimmten Hub des Ventiltellers (15) mit dem Rohrabschnitt (23) dicht zusammenwirkt.

6. Thermostatventil nach einem oder mehreren der Ansprüche 1 - 5,
dadurch gekennzeichnet,
- daß im kaltseitigen Endabschnitt (26) der Kapsel (13) als zusätzliche Wärmezufuhr-Einrichtung ein elektrischer Schichtwiderstand (30) als Heizelement (31) im Dehnstoff (12) der Kapsel (13) plaziert ist.

7. Thermostatventil nach Anspruch 6, dadurch gekennzeichnet,
- daß als Schichtwiderstand ein Metall-Schichtwiderstand (30) gewählt ist, der
- auf einer Metallfahne bzw. einem Metall- oder Keramik-Körper (32) von durch Formgebung (Zylinder, Würfel, Quader) gewählt großer Oberfläche und hoher Wärmeleitfähigkeit angeordnet ist.

8. Thermostatventil nach Anspruch 6 und 7,
dadurch gekennzeichnet,
- daß dem Metall-Schichtwiderstand (30) Wärmeleitblöcke (33) aus einem Stoff/Material hoher Wärmeleitfähigkeit zugeordnet sind, wobei
- die Wärmeleitblöcke (33) durch Rippen (34) vergrößerte Wärmeübergangsflächen zum Dehnstoff (12) aufweisen.

9. Thermostatventil nach den Ansprüchen 6 bis 8, dadurch gekennzeichnet,
- daß die den Metall-Schichtwiderstand (30) tragende Fahne (32) sowie die zugeordneten Wärmeleitblöcke (33) jeweils aus einer Leichtmetall-Verbindung gebildet sind, und
- daß der Dehnstoff (12) in der Kapsel (13) mit einem die Wärmeleitung steigernden Metall-Pulver (Pulver aus einer Aluminium-Verbindung) versetzt ist.

10. Thermostatventil nach den Ansprüchen 6 bis 9, dadurch gekennzeichnet, daß der Metall-Schichtwiderstand (30) über eine Steuereinrichtung in Abhängigkeit von Kennfeldgrößen, insbesondere der Brennkraftmaschine, gesteuert/geregelt ist.

## Claims

1. A thermostatic valve for the cooling circuit of an internal combustion engine,
- in which a main valve (8), impacted with cold on one side and hot on the other, is operated depending on temperature via an expansion element (11), which
- is in lifting drive connection with the main valve (8) via a hot side end section (18) and is supported by a cold side end section (26) in a fixed position, whereby
- a capsule (13) holding expansion material (12), working on an actuating member (14), which is active in one of the end sections (18, 26), and penetrates a valve disc (15) of the main valve (8) via a piercing (16), is equipped with a separate heat induction device in the cold side end section (26),
characterised in that,
- the heat induction device is an annular chamber (24) of the expansion material capsule (13) in the cold side end section (26) on the other side of the valve disc (15), with a connection to the coolant on the hot side.

2. A thermostatic valve according to Claim 1, characterised in that
- a tube section (23) arranged in the piercing (16) of the valve disc (15), outstanding on the cold side, forms the coolant holding annular chamber (24) with the outer circumference of the expansion material capsule (13), which
- on the cold side has an opening (35) controlled in dependency on a predetermined lift of the valve disc (15) and the tube section (23).

3. A thermostatic valve according to Claim 1 and Claim 2, characterised in that the tube section (23) is either made from an isolating material or as a metallic tube section provided with a heat retarding isolating layer (27).

4. A thermostatic valve according to one of the Claims 2 and 3, characterised in that
- the cold side end section (26) of the expansion material capsule (13) is supported in a fixed position by an isolating cap (28), whose
- extension in the direction of the annular chamber (24) is selected at least for an arrangement of a closing element (25) for the opening (35) of the annular chamber (24).

5. A thermostatic valve according to Claim 4, characterised in that
- the closure element (25) has an elastic collar (29) in the lift direction or is an O-ring, which in either case
- works closely together with the tube section (23) over a predetermined lift of the valve disc (15).

6. A thermostatic valve according to one or more of the Claims 1 - 5, characterised in that
- as an additional heat providing device, an electrical film resistor (30) is placed in the cold side end section (26) of the capsule (13) as a heating element (31) in the expansion material (12) of the capsule (13).

7. A thermostatic valve according to Claim 6, characterised in that
- a metal film resistor (30) is selected as the film resistor, which
- is arranged on a metal strip or a metal or ceramic body (32) which is selected in its form (cylinder, cube, cuboid) for large surface area and high thermal conductivity.

8. A thermostatic valve according to Claims 6 and 7, characterised in that
- heat conducting blocks (33) of a material with high thermal conductivity are arranged on the metal film resistor (30), whereby
- the heat conducting blocks (33) have heat transfer surfaces to the expansion material (12) increased by means of ribs (34).

9. A thermostatic valve according to Claims 6 to 8, characterised in that
- the strip (32) carrying the metal film resistor (30) and the attached heat conducting blocks (33) are each made of a light metal compound, and
- the expansion material (12) in the capsule (13) is compounded with a heat conduction increasing metal powder (a powder of an aluminium compound).

10. A thermostatic valve according to the Claims 6 to 9, characterised in that the metal film resistor (30) is controlled/regulated via a control device in dependency on characteristic values, especially of an internal combustion engine.

## Revendications

1. Soupape thermostatique pour le circuit de refroidissement d'un moteur à combustion interne dans laquelle
- un élément de matière dilatable (11) actionne, en fonction de la température, une soupape principale (8) ayant une extrémité froide et une extrémité chaude,
- cet élément de matière dilatable coopère dans le sens de l'entraînement avec l'extrémité chaude (18) de la soupape principale (8), et s'appuie en un point fixe par une extrémité froide (26),
- une capsule (13) traversant la tête (15) de la soupape principale (8) par un passage (16) et contenant une matière dilatable (12) agissant sur un organe d'actionnement (14) prévu au niveau de l'une des extrémités (18, 26), est équipée au niveau de l'extrémité froide (26) d'une installation particulière d'apport de chaleur,
caractérisée en ce que
l'installation d'apport de chaleur est une chambre annulaire (24) communiquant avec le fluide de refroidissement du côté chaud, cette chambre annulaire étant associée à la capsule de matière dilatable (13), dans l'extrémité froide (26) de l'autre côté de la tête de soupape (15).

2. Soupape thermostatique selon la revendication 1,
caractérisée en ce que
- un segment tubulaire (23), logé dans le passage (16) de la tête de soupape (15), et qui déborde du côté froid, délimite avec la périphérie extérieure de la capsule de matière dilatable (13), la chambre annulaire (24) recevant le fluide de refroidissement,
- du côté froid, et selon une course prédéterminée de la tête de soupape (15) ou du segment tubulaire (23), cette chambre comporte une ouverture commandée (35).

3. Soupape thermostatique selon les revendications 1 et 2,
caractérisée en ce que
le segment tubulaire (23) est soit réalisé en une matière isolante soit en un segment tubulaire métallique avec une couche isolante (27) retenant la chaleur.

4. Soupape thermostatique selon l'une des revendications 2 et 3,
caractérisée en ce que
- l'extrémité froide (26) de la capsule de matière dilatable (13) s'appuie en un point fixe par un capuchon isolant (28),
- l'extension du capuchon isolant en direction de la chambre annulaire (24) est choisie pour permettre au moins le montage d'un élément d'obturation (25) de l'ouverture (35) de la chambre annulaire (24).

5. Soupape thermostatique selon la revendication 4,
caractérisée en ce que
- l'élément d'obturation (25) est une collerette élastique (29) ou un joint torique dirigé dans la direction du déplacement, et
- cet élément d'obturation coopère étroitement avec le segment tubulaire (23) pour une course prédéterminée de la tête de soupape (15).

6. Soupape thermostatique selon une ou plusieurs des revendications 1 à 5,
caractérisée en ce que
l'extrémité froide (26) de la capsule (13) comporte en outre une installation d'apport thermique sous la forme d'une résistance électrique (30) en couche, constituant un élément chauffant (31) placé dans la matière dilatable (12) de la capsule (13).

7. Soupape thermostatique selon la revendication 6,
caractérisée en ce que
- la résistance à couche est une résistance métallique à couche (30),
- cette résistance est placée sur un ruban métallique ou sur un corps métallique ou en céramique (32) dont la forme (cylindre, cube, parallélépipède) a une grande surface et dont la conductivité thermique est élevée.

8. Soupape thermostatique selon les revendications 6 et 7,
caractérisée en ce que
- les blocs conducteurs de chaleur (33) en une matière/matériau de conductivité thermique élevée sont associés à la résistance métallique en couche (30),
- les blocs conducteurs de chaleur (33) ont des surfaces de conduction thermique agrandies par des ailettes (34) en direction de la matière dilatable (12).

9. Soupape thermostatique selon les revendications 6 à 8,
caractérisée en ce que
- le ruban (32) portant la résistance métallique en couche (30) ainsi que les blocs conducteurs de chaleur (33), associés, sont formés chaque fois par une combinaison de métal léger et
- la matière dilatable (12) de la capsule (13) est chargée d'une poudre métallique augmentant la conductivité (poudre d'un composé d'aluminium).

10. Soupape thermostatique selon les revendications 6 à 9,
caractérisée en ce que
la résistance métallique en couche (30) est commandée/régulée par une installation de commande selon des grandeurs caractéristiques, notamment du moteur à combustion interne.
